# EUROPEAN PATENT SPECIFICATION

(11) **EP 2 064 957 B1**
(45) Date of publication and mention of the grant of the patent: **09.01.2013**
(21) Application number: 08168937.4
(22) Date of filing: 12.11.2008
(51) Int. Cl.: A23G 9/28, B67D 1/14

(54) **Machine for making and dispensing frozen food products such as crushed-ice drinks, sorbets and the like.**
Maschine zur Herstellung und Ausgabe von gefrorenen Lebensmitteln, wie Getränke aus zerkleinertem Eis, Sorbets und dergleichen
Machine pour la fabrication et la distribution de produits alimentaires surgelés tels que des boissons à base de glace pilée, des sorbets et similaires

(30) Priority: 20.11.2007 IT BO20070764
(43) Date of publication of application: 03.06.2009
(73) Proprietor: Carpigiani Group - ALI S.p.A., 40011 Anzola Dell'Emilia (BO) (IT)
(72) Inventor: Cocchi, Gino, 40137 Bologna (IT); Escriva Estruch, Vicente CARPIGIANI GROUP - ALI S.p.A., 46700 Gandia (Valencia) (ES)
(74) Representative: Bianciardi, Ezio

(56) References cited:
- EP-A- 1 692 945
- FR-A1- 2 705 550
- GB-A- 165 138
- US-A- 4 162 029

## Description

The present invention relates to a machine for making and dispensing frozen food products such as crushed-ice drinks, sorbets and the like.

Machines of this type, commonly known as crushed-ice drink makers or sorbet makers, usually comprise a transparent tank, for mixing and cooling a fluid which will be dispensed, in the form of a crushed-ice drink or sorbet, through a tap located close to the bottom of the tank.

The tank is closed at the top by a removable lid and houses, in its lower part, a mixer element of the screw type and an evaporator of a refrigerating circuit.

The tank usually has the shape of a parallelepiped, with the exception of its lower part, which is rounded in such a way that it partly envelops the substantially cylindrical perimeter of the mixer - evaporator unit and so prevents the formation of product stagnation zones.

The tap usually comprises a cylindrical body inside which there is slidably inserted and guided a plunger moved by a suitable lever against the opposing action of elastic means. The plunger can move vertically between a lowered closed position, in which it blocks an opening made in the front wall of the tank and which leads to a lateral portion of the cylindrical body, and a raised open position, in which it frees the opening through which the product flows, the product therefore being able to come out through a lower end of the cylindrical body.

The plunger has two annular seals distanced from one another along its longitudinal axis. In the closed position, the lower annular seal lies below the opening made in the tank, whilst the upper annular seal lies above said opening, in such a way as to prevent the product from coming out through the duct formed by the cylindrical body. In the open position, the lower annular seal is moved so that it is above the opening.

Therefore, when the plunger is in the closed position, part of the product leaks between the edges of the opening and the portion of the plunger located between the two annular seals, so that the gap delimited by an inner wall of the duct and by the plunger itself is partly filled.

Even during plunger movement, the product remains in said gap, trapped by the annular seals, and, since it is not mixed again and cooled like the rest of the product contained in the tank, its food properties are compromised. Moreover, since the tank and the cylindrical body are made of transparent material, product stagnation in the gap compromises the appearance of the machine and the effect on possible purchasers. The tank must therefore be frequently emptied so that the plunger can be disassembled and the tap cleaned.

Another disadvantage found in prior art machines is due to the fact that, since the product to be dispensed is a semi-fluid substance at a temperature close to that of freezing, its flow through both the opening in the tank and through the tap may often be obstructed by the formation of build-ups of ice.

In such circumstances, the operator using the machine may instinctively insert his fingers in the duct, as far as the tank discharge opening, to mechanically remove the ice obstruction which formed.

Said operation may involve serious consequences for the operator, both after possible contact between the fingers and the rotating screw and after the sudden release of the plunger which is subject to the action of the above-mentioned elastic means.

The real possibility that during normal machine use the operator may be injured is another significant disadvantage of the prior art machines.

The present invention has for an aim to provide a machine for making and dispensing frozen food products such as crushed-ice drinks, sorbets and the like which prevents product stagnation in zones of the tap where the product cannot be kept in conditions suitable for its preservation.

The present invention also has for an aim to provide a machine for making and dispensing frozen food products such as crushed-ice drinks, sorbets and the like which allows the frequency of tap cleaning and/or maintenance operations to be limited.

It is also known from the document FR2705550 a device for dispensing alimentary products that comprises a tank for containing and processing the product to be dispensed, having a product discharge duct and a tap asscociated at the duct. The tap comprises a plug and a plurality of lever for imparting to the plug a substantially rotary movement, between an open and a closed positions of the duct.

Yet another aim of the present invention is to provide a machine for making and dispensing frozen food products such as crushed-ice drinks, sorbets and the like whose tap is practical and safe to use. Accordingly, to achieve the above-mentioned aims, the present invention provides a machine for making and dispensing frozen food products such as crushed-ice drinks, sorbets and the like comprising the characteristics described in one or more of the claims herein.

The present invention is now described, by way of example and without limiting the scope of application, with reference to the accompanying drawings, in which:
- Figure 1 is a perspective view of a machine made in accordance with the present invention;
- Figure 2 is a perspective view of a detail of the machine from Figure 1, and in particular shows a tap which is part of the subject matter of the present invention;
- Figure 3 is an exploded perspective view of the tap of Figure 2;
- Figure 4 is a cross-section of the tap of Figure 2, in a closed position;
- Figures 5a and 5b are cross-sections of the tap of Figure 2, respectively in a semi-open position and in a completely open position, according to a first method for operating the tap; and
- Figures 6a and 6b are cross-sections of the tap of Figure 2, respectively in a semi-open position and in a completely open position, according to a second method for operating the tap.

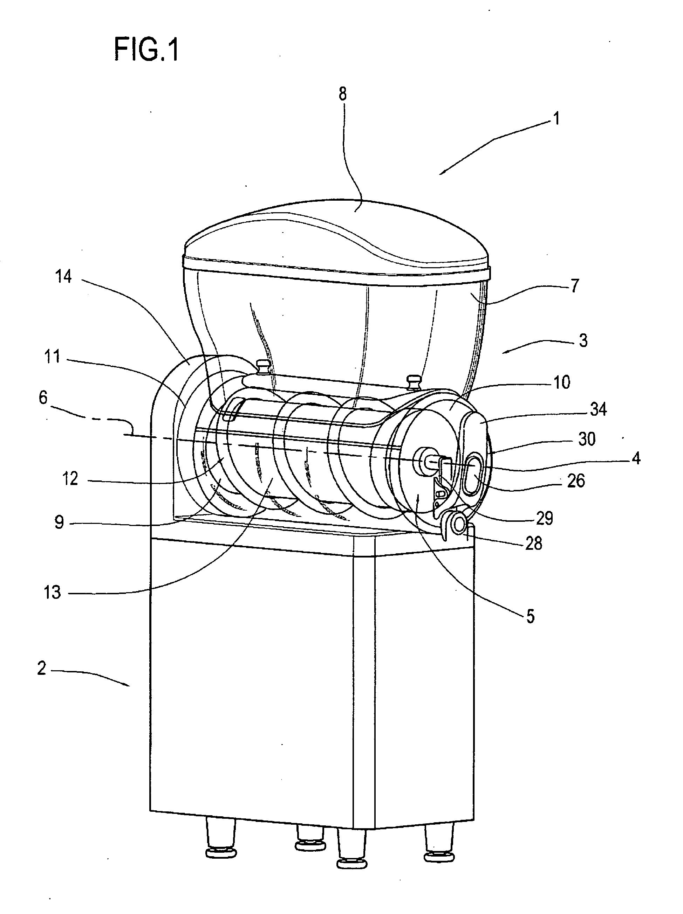

With reference to Figure 1, the numeral 1 denotes as a whole a machine for making and dispensing frozen food products such as crushed-ice drinks, sorbets and the like.

The machine 1 comprises a base 2 housing a refrigerating circuit of the known type and not illustrated.

Mounted on the base 2 there is a transparent containment tank 3, for processing, specifically mixing and cooling, a fluid intended to be dispensed, in the form of a crushed-ice drink, sorbet or the like, through a tap 4 located close to the bottom of the tank 3 and able to regulate and interrupt the flow of product to be dispensed.

The tank 3 has a substantially cylindrical lower chamber 5 extending around a horizontal axis 6, and an upper chamber 7 which leads into the lower chamber 5. The upper chamber constitutes a mouth for loading the lower chamber from above.

The chamber 7 substantially has the shape of a parallelepiped and is closed at the top by a removable lid 8.

Around the axis 6 the chamber 5 is delimited, at the bottom and the sides, by a single substantially tubular cylindrical wall 9, whilst, in the direction of the axis 6, the chamber 5 is delimited, at the front, by a wall 10, facing the operator and supporting the tap 4. Again in the direction of the axis 6, on the opposite side to the wall 10, the chamber 5 has an opening 11. The front wall 10 and the rear opening 11 are both circular.

The chamber 5 contains, and completely surrounds, a mixer element 12 of the screw type and an evaporator 13, the latter being part of the above-mentioned refrigerating circuit.

The mixer 12 is driven in rotation about the axis 6, and about the evaporator 13, by a motor, not illustrated, which is mounted on a shoulder 14 of the base 2 which seals the above-mentioned opening 11.

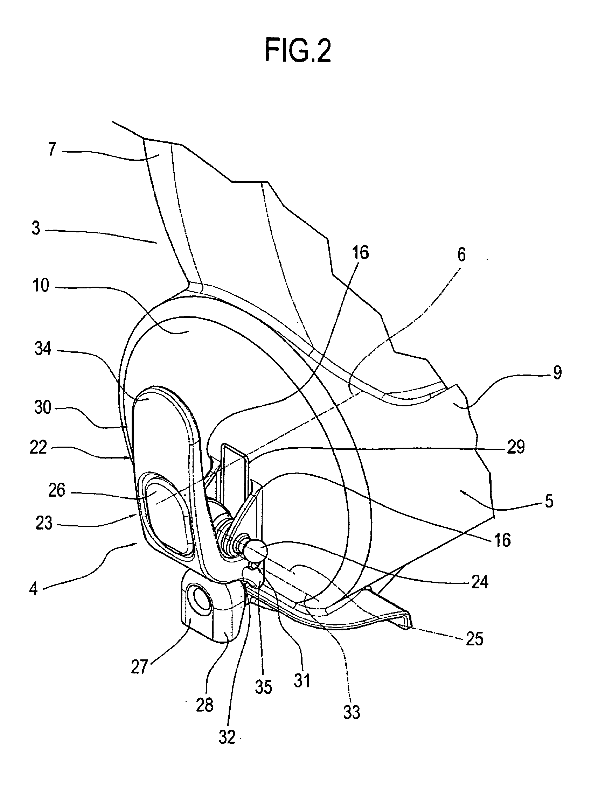

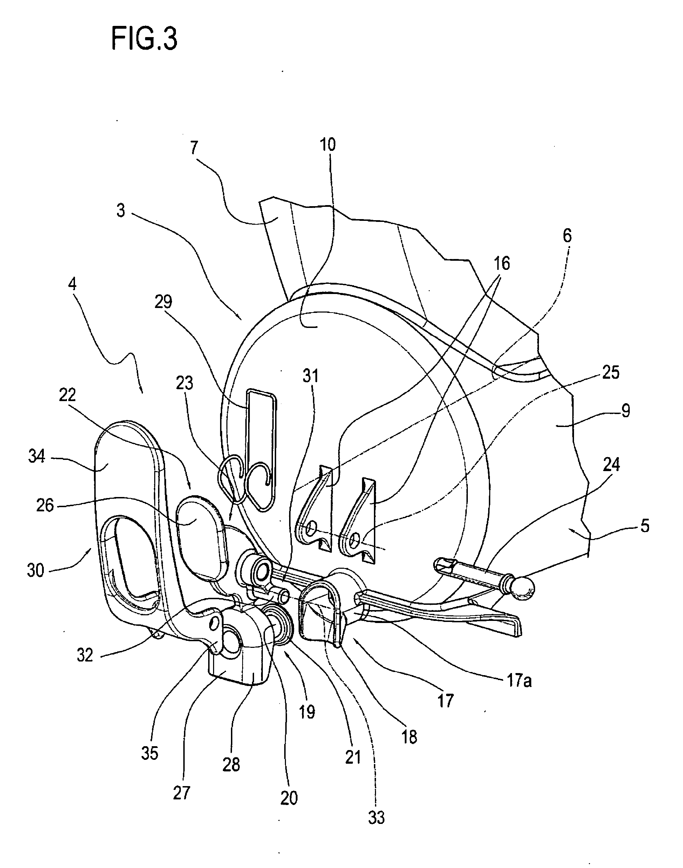

As illustrated, for example in Figures 2, 3 and 4, the front wall 10 of the tank 3 has a lower product discharge hole 15, above which the wall 10 supports, with two flat projections 16, part of the tap 4. The projections 16 both have the same substantially triangular shape and extend at right angles from the wall 10, being distanced from each other and parallel according to respective vertical planes in which they lie.

The tap 4 comprises a dispensing duct 17, which has a portion 17a connected to the discharge hole 15, specifically extending longitudinally from the wall 10, starting at the annular edge of the wall 10 which delimits the hole 15.

The portion 17a of the duct 17 has, along its entire length, a cylindrical tubular shape, extending longitudinally in a direction at a right angle to the wall 10, that is to say, parallel with the axis 6, and it has a dispensing tip 18 at the end longitudinally opposite the hole 15. The dispensing tip 18 of the duct 17 points downwards, that is to say, towards the base 2.

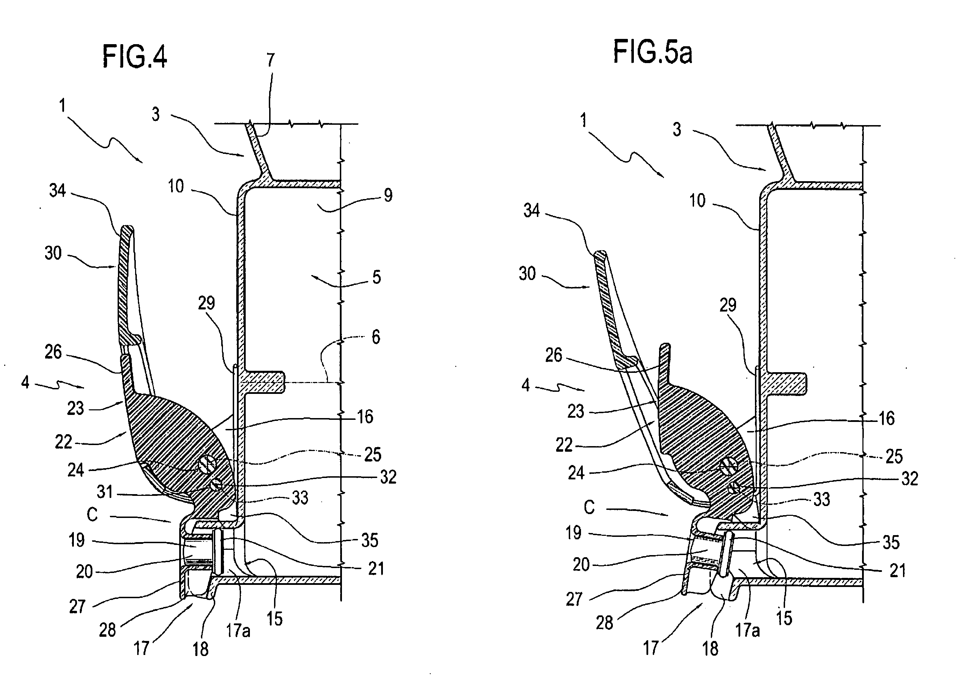

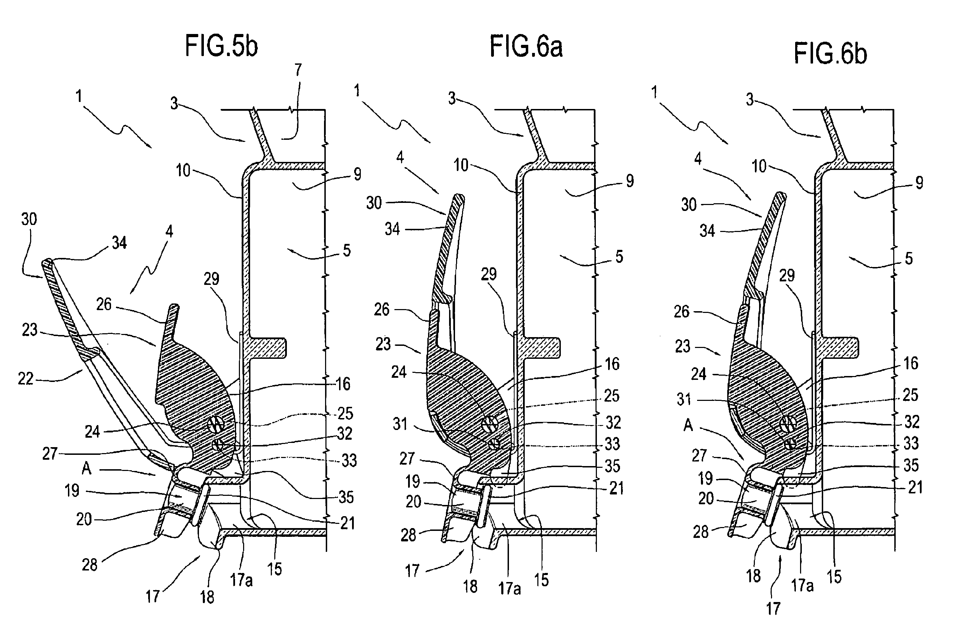

The tap 4 also comprises a plug 19, able to move between a position A in which the duct 17 is open (Figures 5b, 6b), allowing the product to be dispensed through the duct 17, and a position C in which the duct 17 is closed (Figure 4), to prevent the product from coming out through the duct 17.

As illustrated in Figure 4, in the closed position C the plug 19 is inserted coaxially in a sealed fashion in the portion 17a of the duct 17. In particular, the plug 19, which is preferably made as a single piece of deformable elastic material, consists of a cylindrical body 20 with one axial end surrounded by an annular sealing and scraping seal 21.

At least the latter is completely inserted in a sealed fashion in the portion 17a of duct 17 in the above-mentioned closed position C.

As illustrated in Figures 5b and 6b, in the open position A, the plug 19 is substantially removed from the portion 17a of the duct 17. In particular, the plug 19 has a wall 19a, facing the hole 15 in the tank 3 and forming, at the open position A, a wall for diverting the flow of product being dispensed. More precisely, the wall 19a is substantially parallel with the axis of the tip 18, together with the latter defining the correct angle of the product dispensing flow from the tap 4.

The tap 4 also comprises a plug 19 control unit 22 for imparting to the plug a substantially rotary movement between the above-mentioned open and closed positions A and C. It should be noticed that the complete movement of the plug 19, from and towards the position C, is allowed by its deformability, which allows it to follow a linear path, inside the portion 17a of the duct 17, when in contrast the control unit 22 would impart a purely rotary motion to it.

The control unit 22 is of the lever type and comprises a first rocker lever 23 hinged to the front wall 10 of the tank 3. In particular, the rocker lever 23 is hinged to the front ends of the projections 16 by means of a pin 24 which is at a right angle to the projections 16. In other words, the rocker lever 23 is designed to rotate, relative to the tank 3 which supports it, about an axis 25 having a direction at a right angle to that of the axis 6.

On opposite sides of the pin 24, the rocker lever 23 has a first operating arm 26 and a second supporting arm 27 for the plug 19. In this way, a movement of the arm 26 towards the front wall 10 of the tank 3 corresponds to a movement extracting the plug 19 from the duct 17. A movement of the arm 26 away from the wall 10 corresponds to a movement inserting the plug 19 in the duct 17.

At its end which in practice is located immediately below the plug, the arm 27 has a panel 28, acting as a splashguard, which, when the plug 19 is in the open position A, is opposite the tip 18 so that together with the latter it forms an outflow guide for the product dispensed. For this purpose, the panel 28 and the tip 18 are positioned and shaped relative to each other in such a way that they are curved like semi-tubular profiles opposite each other.

The control unit 22 also comprises an elastic element, consisting of a spring 29, which is inserted between the arm 26 and the wall 10 to exert an action that opposes opening of the duct 17 and to keep the plug 19 in the above-mentioned closed position C in the absence of external actions on the tap 4.

In addition to the rocker lever 23, the control unit 22 comprises another rocker lever 30, connected to the rocker lever 23 by a hinge 31 which is close to and parallel with the pin 24. In particular, the hinge 31 comprises two pins 32, extending coaxially on opposite sides of the rocker lever 23 and parallel with the pin 24.

The rocker lever 30 is designed to rotate, relative to the rocker lever 23, about an axis 33 parallel with the axis 25, and it can be operated directly by the machine 1 user so as to indirectly move the rocker lever 23. For this purpose, the rocker lever 30 has an arm 34, forming a grip of the control unit 22 and designed to engage by making contact with the rocker lever 23, and its other arm 35 designed to engage by making contact with the wall 10 of the tank 3.

In practice, according to a first method for operating the tap 4, the arm 34 of the rocker lever 30 engages by making contact with the arm 26 of the rocker lever 23 in a joint rotation of the rocker levers 23 and 30 which brings both of the arms 26 and 34 towards the wall 10 of the tank 3. As already indicated, a movement of the arm 26 towards the front wall 10 of the tank 3 corresponds to a movement extracting the plug 19 from the duct 17.

Alternatively, according to another method for operating the tap 4, the arm 35 of the rocker lever 30 engages by making contact with the wall 10 of the tank 3 in an opposite rotation of the rocker levers 23 and 30 which brings the arm 34 of the rocker lever 30 away from the wall 10 and the arm 26 of the rocker lever 23 towards the wall 10. Again, a movement of the arm 26 towards the front wall 10 of the tank 3 corresponds to a movement extracting the plug 19 from the duct 17.

In other words, the same movement extracting the plug 19 may be obtained both by pushing the arm 34 towards the wall 10 and by pulling the arm 34 away from the wall 10.

Added to said tap 4 versatility is considerable operating effectiveness, since in passing from the closed position C to the open position A the initial movement of the plug 19, when the latter is still coupled to the duct 17 in a sealed fashion, creates a vacuum in the duct 17. Said vacuum facilitates the removal of any build-ups of ice which may have formed in the duct 17 and also guarantees safe extraction of the product from the tank 3.

It is also important to emphasise how the movement of the plug 19, during opening and closing, cleans the duct 17, thanks to the scraping action of the scraping seal 21.

Finally, as is obvious from the above description, the tap 4 is not affected by any product stagnation in zones where the product cannot be kept in conditions suitable for its preservation. As shown in Figure 4, when the duct 17 is closed by the plug 19 it contains product which is completely in contact with that contained in the rest of the tank 3 and which, together with the latter, is continuously recirculated inside the tank 3.

The invention described above is susceptible of industrial application and may be modified and adapted in several ways without thereby departing from the scope of the inventive concept. Moreover, all details of the invention may be substituted by technically equivalent elements.

## Claims

1. A machine for making and dispensing frozen food products such as crushed-ice drinks, sorbets and the like, comprising a tank (3) for containing and processing the product to be dispensed, the tank (3) having a wall (10) in which a product discharge hole (15) has been made; the machine (1) also comprising a tap (4), having a dispensing duct (17) connected to the discharge hole (15), and designed to regulate and interrupt the flow of product to be dispensed; the tap (4) comprises a plug (19) able to move between a position (A) in which the duct (17) is open, allowing the product to be dispensed through the duct (17), and a position (C) in which the duct (17) is closed, preventing the product from coming out through the duct (17); in said closed position (C) the plug (19) being inserted in a sealed fashion in at least a portion (17a) of the duct (17) which extends longitudinally starting from the hole (15) in a direction transversal to the wall (10); the tap (4) comprises plug (19) control means (22) for imparting to the plug (19), between the open and closed positions (A, C), a substantially rotary movement, machine being **characterised in that** the plug (19) control means (22) are of the lever type and comprise a first rocker lever (23) hinged to the wall (10) of the tank (3); the first rocker lever (23) having a first operating arm (26) and a second supporting arm (27) for the plug (19).

2. The machine according to claim 1, **characterised in that** in the open position (A), the plug (19) is at least partly extracted from the portion (17a) of the duct (17).

3. The machine according to claim 2, **characterised in that** the plug (19) has a wall (19a) facing towards the discharge hole (15), said wall (19a), in the plug (19) open position (A), forming a wall for diverting the flow of product being dispensed.

4. The machine according to any of the claims from 1 to 3, **characterised in that** the portion (17a) of the duct (17) extends from the wall (10) in a direction at a right angle to the wall (10).

5. The machine according to any of the claims from 1 to 4, **characterised in that** the wall (10) is a front wall of the tank (3).

6. The machine according to any of the claims from 1 to 5, **characterised in that** the plug (19) comprises an annular scraping seal (21).

7. The machine according to claim 6, **characterised in that** the plug (19) is completely made of elastic material.

8. The machine according to claim 1, **characterised in that** the plug (19) control means (22) comprise an elastic element (29) inserted between the first arm (26) and the wall (10) to exert an action that opposes opening of the duct (17) and to keep the plug (19) in the closed position (C).

9. The machine according to claim 1 or 8, **characterised in that** the plug (19) control means (22) comprise a second rocker lever (30) hinged to the first rocker lever (23); the second rocker lever (30) having a third arm (34) forming an operating grip of the control means (22), and a fourth arm (35) designed to engage by making contact with the wall (10) of the tank (3).

10. The machine according to claim 9, **characterised in that** the third arm (34) engages by making contact with the first arm (26) in a joint rotation of the first and second rocker levers (23, 30) which, according to a first method for operating the tap (4), brings the first and the third arms (26, 34) towards the wall (10) of the tank (3).

11. The machine according to claim 9 or 10, **characterised in that** the fourth arm (35) engages by making contact with the wall (10) of the tank (3) in an opposite rotation of the first and second rocker levers (26, 30) which, according to a second method for operating the tap (4), brings the third arm (34) away from the wall (10) of the tank (3) and the first arm (26) towards the wall (10) of the tank (3).

12. The machine according to any of the claims from 1 to 11, **characterised in that** the duct (17) comprises a tip (18) located at the end of the duct which is longitudinally opposite the hole (15).

13. The machine according to claim 12, **characterised in that** the second arm (27) of the first rocker lever (23) supports a panel (28), acting as a splash-guard, which, when the plug (19) is in the open position (A), is opposite the tip (18), together with the latter forming an outflow guide for the product dispensed.

14. The machine according to claim 13, **characterised in that** the panel (28) and the tip (18) are positioned and shaped relative to each other in such a way that they are curved like semi-tubular profiles opposite each other.

## Patentansprüche

1. Maschine zur Herstellung und Ausgabe von gefrorenen Lebensmitteln, wie Getränke aus zerkleinertem Eis, Sorbets und dergleichen, umfassend einen Behälter (3) zur Aufnahme und Verarbeitung des auszugebenden Produkts, wobei der Behälter (3) eine Wand (10) aufweist, in der eine Öffnung (15) zum Ablassen eines Produkts ausgebildet ist; wobei die Maschine (1) ferner einen Hahn (4) umfasst, aufweisend eine Ausgabeleitung (17), die mit der Ablassöffnung (15) verbunden und dazu konzipiert ist, den Fluss des auszugebenen Produkts zu regulieren und zu unterbrechen; wobei der Hahn (4) einen Stopfen (19) umfasst, der dazu fähig ist, sich zwischen einer Position (A), in der die Leitung (17) offen ist, wodurch eine Ausgabe des Produkts durch die Leitung (17) gestattet wird, und einer Position (C), in der die Leitung (17) geschlossen ist, wodurch ein Heraustreten des Produkts durch die Leitung (17) verhindert wird, zu bewegen, wobei der Stopfen (19) in der geschlossenen Position (C) abdichtend in mindestens einem Abschnitt (17a) der Leitung (17) eingefügt ist, der sich longitudinal, beginnend von der Öffnung (15), in eine Richtung erstreckt, die transversal zur Wand (10) ist; wobei der Hahn (4) Mittel (22) zur Steuerung des Stopfens (19) umfasst, die zwischen der offenen und geschlossenen Position (A, C) eine im Wesentlichen drehende Bewegung des Stopfens (19) auslösen, wobei die Maschine **dadurch gekennzeichnet ist, dass** die Mittel (22) zur Steuerung des Stopfens (19) vom Hebeltyp sind und einen ersten Schwinghebel (23) umfassen, der schwenkbar an der Wand (10) des Behälters (3) befestigt ist; wobei der erste Schwinghebel (23) einen ersten Betätigungsarm (26) und einen zweiten Arm (27) zum Halten des Stopfens (19) aufweist.

2. Maschine nach Anspruch 1, **dadurch gekennzeichnet, dass** der Stopfen (19) in der offenen Position (A) zumindest teilweise aus dem Abschnitt (17a) der Leitung (17) herausgezogen ist.

3. Maschine nach Anspruch 2, **dadurch gekennzeichnet, dass** der Stopfen (19) eine Wand (19a) aufweist, die der Ablassöffnung (15) zugewandt ist, wobei die Wand (19a) in der offenen Position (A) des Stopfens (19) eine Wand zum Umlenken des Flusses des auszugebenden Produkts bildet.

4. Maschine nach einem der Ansprüche 1 bis 3, **dadurch gekennzeichnet, dass** sich der Abschnitt (17a) der Leitung (17) von der Wand (10) in eine Richtung erstreckt, die rechtwinklig zur Wand (10) ist.

5. Maschine nach einem der Ansprüche 1 bis 4, **dadurch gekennzeichnet, dass** die Wand (10) eine Stirnwand des Behälters (3) ist.

6. Maschine nach einem der Ansprüche 1 bis 5, **dadurch gekennzeichnet, dass** der Stopfen (19) eine ringförmige, abstreichende Dichtung (21) umfasst.

7. Maschine nach Anspruch 6, **dadurch gekennzeichnet, dass** der Stopfen (19) vollständig aus einem elastischen Material gefertigt ist.

8. Maschine nach Anspruch 1, **dadurch gekennzeichnet, dass** die Mittel (22) zur Steuerung des Stopfens (19) ein elastisches Element (29) umfassen, das zwischen dem ersten Arm (26) und der Wand (10) eingefügt ist, um eine Handlung auszuführen, die der Öffnung der Leitung (17) entgegenwirkt und den Stopfen (19) in der geschlossenen Position (C) hält.

9. Maschine nach Anspruch 1 oder 8, **dadurch gekennzeichnet, dass** die Mittel (22) zur Steuerung des Stopfens (19) einen zweiten Schwinghebel (30) umfassen, der schwenkbar am ersten Schwinghebel (23) befestigt ist, wobei der zweite Schwinghebel (30) einen dritten Arm (34) aufweist, der einen Griff zum Betätigen der Steuermittel (22) bildet, sowie einen vierten Arm (35), der zum Eingriff durch das Anlegen an die Wand (10) des Behälters (3) konzipiert ist.

10. Maschine nach Anspruch 9, **dadurch gekennzeichnet, dass** der dritte Arm (34) durch Anlegen am ersten Arm (26) in einer gemeinsamen Drehung des ersten und zweiten Schwinghebels (23, 30) eingreift, der gemäß einem ersten Verfahren zum Betätigen des Hahns (4) den ersten und den dritten Arm (26, 34) zur Wand (10) des Behälters (3) hin führt.

11. Maschine nach Anspruch 9 oder 10, **dadurch gekennzeichnet, dass** der vierte Arm (35) durch Anlegen an der Wand (10) des Behälters (3) in einer gegensätzlichen Drehung des ersten und zweiten Schwinghebels (26, 30) eingreift, der gemäß einem zweiten Verfahren zum Betätigen des Hahns (4) den dritten Arm (34) von der Wand (10) des Behälters (3) weg und den ersten Arm (26) zur Wand (10) des Behälters (3) hin führt.

12. Maschine nach einem der Ansprüche 1 bis 11, **dadurch gekennzeichnet, dass** die Leitung (17) ein Mundstück (18) umfasst, das am Ende der Leitung liegt, was longitudinal gegenüber der Öffnung (15) ist.

13. Maschine nach Anspruch 12, **dadurch gekennzeichnet, dass** der zweite Arm (27) des ersten Schwinghebels (23) eine Tafel (28) hält, die als Spritzschutz dient, die, wenn der Stopfen (19) in der offenen Position (A) ist, gegenüber dem Mundstück (18) liegt und gemeinsam mit diesem eine Ausflussführung des ausgegebenen Produkts bildet.

14. Maschine nach Anspruch 13, **dadurch gekennzeichnet, dass** die Tafel (28) und das Mundstück (18) relativ zueinander so positioniert und geformt sind, dass sie wie einander gegenüberliegende halbröhrenförmige Profile gebogen sind.

## Revendications

1. Machine pour la fabrication et la distribution de produits alimentaires surgelés tels que des boissons à base de glace pilée, des sorbets et similaires, comprenant un réservoir (3) pour contenir et transformer le produit à distribuer, le réservoir (3) présentant une paroi (10) sur laquelle a été fait un trou d'évacuation (15) ; la machine (1) comportant aussi un robinet (4), avec un conduit de distribution (17) relié au trou d'évacuation (15), et conçu pour régler et interrompre l'écoulement du produit à distribuer ; le robinet (4) comprend un bouchon (19) capable de se déplacer entre une position (A) dans laquelle le conduit (17) est ouvert, permettant au produit d'être distribué par le conduit (17), et une position (C) dans laquelle le conduit (17) est fermé, empêchant le produit de sortir du conduit (17) ; dans ladite position fermée (C), le bouchon (19) étant introduit de façon hermétique dans au moins une section (17a) du conduit (17) qui évolue longitudinalement depuis le trou (15) dans une direction transversale à la paroi (10) ; le robinet (4) comprend des moyens de commande (22) du bouchon (19) pour imprimer au bouchon (19), entre la position ouverte et la position fermée (A, C), un mouvement essentiellement de rotation, la machine **se caractérisant en ce que** les moyens de commande (22) du bouchon (19) sont du type à levier et comprennent un premier levier oscillant (23) monté articulé sur la paroi (10) du réservoir (3) ; le premier levier oscillant (23) ayant un premier bras de commande (26) et un second bras de support (27) pour le bouchon (19).

2. Machine selon la revendication 1, **caractérisée en ce que**, dans la position ouverte (A), le bouchon (19) est au moins partiellement extrait de la section (17a) du conduit (17).

3. Machine selon la revendication 2, **caractérisée en ce que** le bouchon (19) présente une paroi (19a) dirigée vers le trou d'évacuation (15), ladite paroi (19a), dans la position ouverte (A) du bouchon (19), formant une paroi pour dévier l'écoulement du produit à distribuer.

4. Machine selon l'une quelconque des revendications 1 à 3, **caractérisée en ce que** la section (17a) du conduit (17) évolue depuis la paroi (10) dans une direction faisant un angle droit avec la paroi (10).

5. Machine selon l'une quelconque des revendications 1 à 4, **caractérisée en ce que** la paroi (10) est une paroi antérieure du réservoir (3).

6. Machine selon l'une quelconque des revendications 1 à 5, **caractérisée en ce que** le bouchon (19) comprend un joint racleur annulaire (21).

7. Machine selon la revendication 6, **caractérisée en ce que** le bouchon (19) est totalement fabriqué en matière élastique.

8. Machine selon la revendication 1, **caractérisée en ce que** les moyens de commande (22) du bouchon (19) comprennent un élément élastique (29) introduit entre le premier bras (26) et la paroi (10) pour exercer une force qui s'oppose à l'ouverture du conduit (17) et pour garder le bouchon (19) dans la position fermée (C) .

9. Machine selon les revendications 1 ou 8, **caractérisée en ce que** les moyens de commande (22) du bouchon (19) comprennent un second levier oscillant (30) monté articulé sur le premier levier oscillant (23) ; le second levier oscillant (30) présentant un troisième bras (34) formant une préhension opérationnelle des moyens de commande (22), et un quatrième bras (35) conçu pour engager en butée la paroi (10) du réservoir (3).

10. Machine selon la revendication 9, **caractérisée en ce que** le troisième bras (34) engage en butée le premier bras (26) dans une rotation simultanée du premier levier oscillant et du second levier oscillant (23, 30) qui, selon un premier procédé de commande du robinet (4), rapprochent le premier bras et le troisième bras (26, 34) de la paroi (10) du réservoir (3).

11. Machine selon les revendications 9 ou 10, **caractérisée en ce que** le quatrième bras (35) engage en butée la paroi (10) du réservoir (3) dans une rotation opposée du premier levier oscillant et du second levier oscillant (26, 30) qui, selon un second procédé de commande du robinet (4), éloignent le troisième bras (34) de la paroi (10) du réservoir (3) et rapprochent le premier bras (26) de la paroi (10) du réservoir (3).

12. Machine selon l'une quelconque des revendications 1 à 11, **caractérisée en ce que** le conduit (17) comprend un bec (18) situé à l'extrémité du conduit qui est longitudinalement opposée au trou (15).

13. Machine selon la revendication 12, **caractérisée en ce que** le second bras (27) du premier levier oscillant (23) soutient un panneau (28), agissant comme un rabat-eau, qui lorsque le bouchon (19) est dans la position ouverte (A), se retrouve en face du bec (18), formant avec ce dernier un guide de sortie pour le produit distribué.

14. Machine selon la revendication 13, **caractérisée en ce que** le panneau (28) et le bec (18) sont positionnés et formés l'un par rapport à l'autre, de telle manière qu'ils sont courbes comme des profilés semi-tubulaires en face l'un de l'autre.
